# EUROPÄISCHE PATENTSCHRIFT

(11) **EP 1 764 572 B1**
(45) Veröffentlichungstag und Bekanntmachung des Hinweises auf die Patenterteilung: **22.10.2008**
(21) Anmeldenummer: 06018769.7
(22) Anmeldetag: 07.09.2006
(51) Int. Cl.: F28F 9/00, F01P 3/18, B60K 11/04

(54) **Anordnung zur Befestigung eines Wärmeübertragers in einer Zarge, insbesondere für Kraftfahrzeuge**
Assembly to fix a heat exchanger in a shroud, in particular for a vehicle
Dispositif de fixation d'un échangeur de chaleur dans une buse, en particulier pour un véhicule automobile

(30) Priorität: 16.09.2005 DE 102005044293
(43) Veröffentlichungstag der Anmeldung: 21.03.2007
(73) Patentinhaber: Behr GmbH & Co. KG, 70469 Stuttgart (DE)
(72) Erfinder: Assis, Mauro, 70435 Stuttgart (DE); Strese, Thomas, Dipl.-Ing., 70195 Stuttgart (DE)
(74) Vertreter: Mantel, Berthold Friedrich

(56) Entgegenhaltungen:
- EP-A1- 0 401 571
- EP-A2- 0 693 665
- DE-A1- 3 404 887
- DE-A1- 10 348 701
- DE-A1- 19 825 653
- DE-A1- 19 857 494
- DE-A1- 19 916 475
- DE-A1- 19 953 787
- DE-A1-1102004 024 15
- DE-C1- 4 137 038
- JP-A- 7 290 977
- US-B1- 6 318 450

## Beschreibung

Die Erfindung betrifft eine Anordnung zur Befestigung eines Wärmeübertragers in einer Zarge nach dem Oberbegriff des Patentanspruches 1.

Zargen oder Lüfterzargen werden bei Kühlmodulen oder Kühlmittelkühlern für Kraftfahrzeuge verwendet und dienen einerseits der Führung der von einem Lüfter durch den Kühler oder die Wärmeübertrager angesaugten Kühlluft sowie der Halterung eines Elektromotors, welcher den Lüfter antreibt. Zargen dienen bei Modulen, welche eine Baueinheit von verschiedenen Wärmeübertragern bilden, auch zur Aufnahme und Befestigung der Wärmeübertrager. Hierfür weist die Zarge, welche vorzugsweise als Kunststoffspritzteil ausgebildet ist, einen Rahmen mit angespritzten Befestigungsmitteln auf, wodurch eine einfache Montage der Wärmeübertrager, möglichst ohne weitere separate Befestigungsmittel möglich ist. Bei der Ausbildung der Befestigungsmittel sind verschiedene Gesichtspunkte zu beachten: einerseits soll eine einfache und schnelle Montage der Wärmeübertrager möglich sein, andererseits sollen die Wärmeübertrager möglichst klapperfrei in der Zarge aufgenommen und schließlich müssen bei der Ausbildung der Lagerstellen temperaturbedingte Dehnungen zugelassen oder fertigungsbedingte Toleranzen der Wärmeübertrager ausgeglichen werden.

Eine gattungsgemäße Befestigungsanordnung gemäß dem Oberbegriff des Anspruchs 1 ist aus DE-3 404 887 bekannt.

Es ist Aufgabe der vorliegenden Erfindung, eine Anordnung zur Befestigung der eingangs genannten Art zu schaffen, welche eine einfache und schnelle Montage, eine sichere Befestigung und eine dehnungsgerechte Aufnahme des Wärmeübertragers in der Zarge erlaubt.

Diese Aufgabe wird durch die Merkmale des Anspruchs 1 gelöst. Vorteilhafte Ausgestaltungen der Erfindung ergeben sich aus den Unteransprüchen.

Erfindungsgemäß weist die Zarge eine Rastverbindung, bestehend aus Rastelement und Verriegelungselement, auf, durch welche der Wärmeübertrager in der Zarge verrastet wird. Dadurch ist eine einfache und schnelle Montage des Wärmeübertragers, insbesondere seine Fixierung entgegen der Montagerichtung möglich. Der Wärmeübertrager wird vorzugsweise entgegen der Fahrtrichtung des Kraftfahrzeuges in die Zarge eingesetzt oder in dieser Richtung beigeklappt, gleitet auf dem Rastelement auf, so dass dieses ausweicht und nach Erreichen der Endposition des Wärmeübertragers zurückschnappt und den Wärmeübertrager hintergreift. In dieser Position des Rastelementes wird ein unverlierbar an der Zarge befestigtes Verriegelungselement derart in Position hinter das Rastelement gebracht, so dass dieses fixiert ist. Der Wärmeübertrager kann somit durch zwei Handgriffe und ohne zusätzliche Befestigungsmittel in seiner Endposition in der Zarge fixiert werden.

Erfindungsgemäß ist das Rastelement fingerartig ausgebildet und weist einen Kopf mit einer Rastnase auf, welche den Wärmeübertrager bzw. seinen Sammelbehälter hintergreift.

Das Verriegelungselement ist über ein Filmscharnier mit der Zarge verbunden, und vorteilhafterweise ebenso wie das Rastelement einstückig an die Zarge angespritzt. Zusätzlich ist an der Zarge ein Widerlager bzw. ein Stützelement angebracht, an welchem sich das bügelförmig ausgebildete Verriegelungselement abstützt. Dadurch wird eine sichere Verriegelung des Rastelementes erreicht, die sich nicht von selbst lösen kann.

Nach einer vorteilhaften Ausgestaltung der Erfindung ist der Wärmeübertrager als Kondensator mit einem Sammelrohr ausgebildet, an welchem ein Anschlussflansch für Kältemittelleitungen befestigt ist. Der Kältemittelanschlussflansch steht einerseits vom Sammelrohr ab und weist andererseits eine etwa rechtwinklige Kante auf, an welcher sich die Rastnase des Rastelementes abstützen kann. Damit werden eine schnelle Montage und eine sichere Befestigung des Kondensators in der Zarge erreicht.

Der Wärmeübertrager kann auch über einen federnd ausgebildeten Bügel gegenüber der Zarge abgestützt werden, was jedoch nicht Gegenstand der Erfindung ist. Damit wird der Vorteil erreicht, dass der Wärmeübertrager spielfrei und unter elastischer Vorspannung in der Zarge abgestützt ist, sich frei ausdehnen kann und auch bei fertigungsbedingten Abweichungen vom Baumaß von der Zarge aufgenommen werden kann.

Bei einer bevorzugten Ausführungsform ist der Wärmeübertrager als Kondensator mit einem Anschlussflansch ausgebildet, welcher sich an dem federnden Bügel abstützt. Durch den Anschlussflansch ist eine ebene Abstützfläche zur Anlage an dem Bügel gegeben. Da der Bügel den Anschlussflansch seitlich umgibt, ist eine Montage entgegen der Fahrtrichtung des Fahrzeuges möglich. Der Bügel liegt somit nach der Montage des Kondensators unter Vorspannung am Anschlussflansch an.

Vorteilhafterweise ist der federnde Bügel als zweiseitig eingespannte, d. h. an die Zarge angespritzte Blattfeder ausgebildet, welche mit ihrem mittleren Bereich am Wärmeübertrager bzw. am Anschlussflansch anliegt. Damit kann aufgrund der Formgebung des Bügels ein den Anforderungen entsprechender Federweg bereitgestellt werden.

Ausführungsbeispiele der Erfindung sind in der Zeichnung dargestellt und werden im Folgenden näher erläutert. Es zeigen
- Fig. 1: ein Kühlmodul für ein Kraftfahrzeug in einer Ansicht in Fahrtrichtung,

- Fig. 2: das Kühlmodul gemäß Fig. 1 mit Kondensator in einer Ansicht entgegen der Fahrtrichtung,
- Fig. 3a: eine Rastverbindung für den Kondensator des Kühlmoduls in verriegelter Position,
- Fig. 3b: die Rastverbindung gemäß Fig. 3a in entriegelten Position und
- Fig. 4: einen federnden Bügel zur Abstützung des Kondensators.

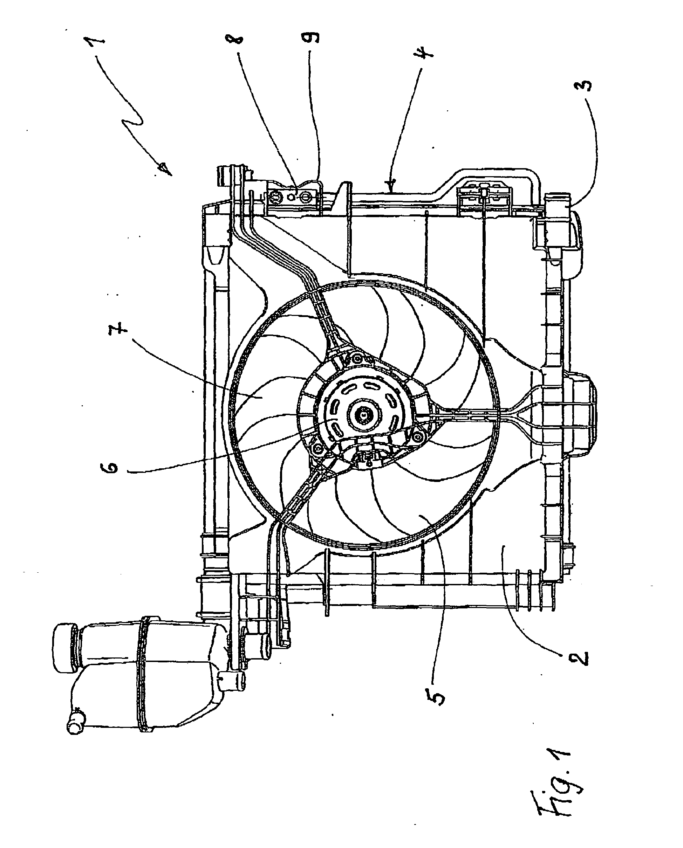

**Fig. 1** zeigt ein Kühlmodul 1 für ein nicht dargestelltes Kraftfahrzeug in einer Ansicht in Fahrtrichtung des Kraftfahrtzeuges gesehen. Das Kühlmodul 1 wird in der dargestellten Lage, d. h. etwa senkrecht im vorderen Motorraum des Kraftfahrzeuges eingebaut und wird von Umgebungsluft bzw. vom Fahrtwind durchströmt. Eine Zarge 2 nimmt zwei Wärmeübertrager, einen Kühlmittelkühler 3 und einen Kondensator 4, beide nur teilweise sichtbar, weil durch die Zarge 2 abgedeckt, auf. Die Zarge 2 weist eine kreisförmige Lüftdurchtrittsöffnung 5 auf, in welcher ein durch einen Elektromotor 6 angetriebener Lüfter 7 umläuft. Der Kondensator 4 weist einen Anschlussflansch 8 auf, welcher an einem federnd ausgebildeten Bügel 9 gegenüber der Zarge 2 abgestützt ist.

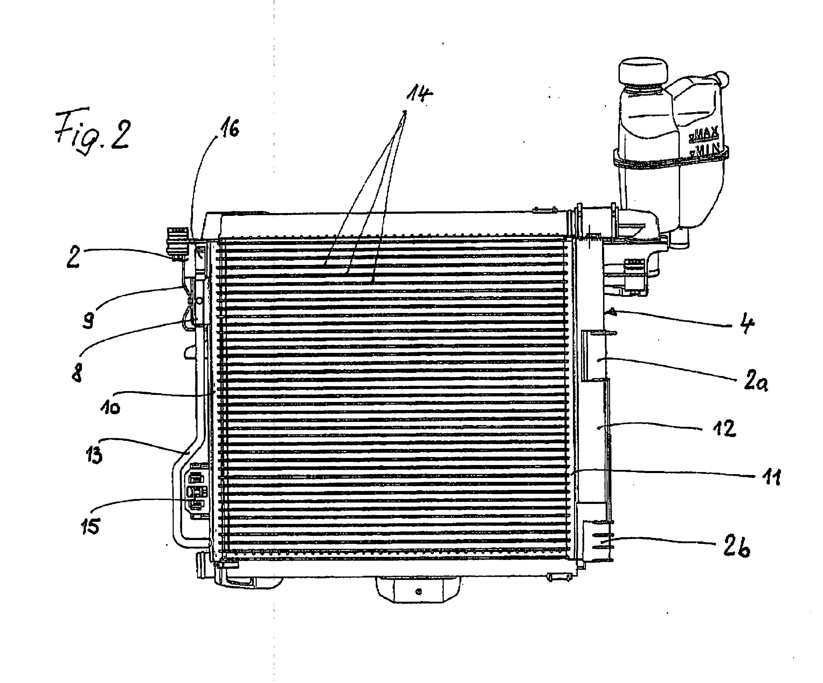

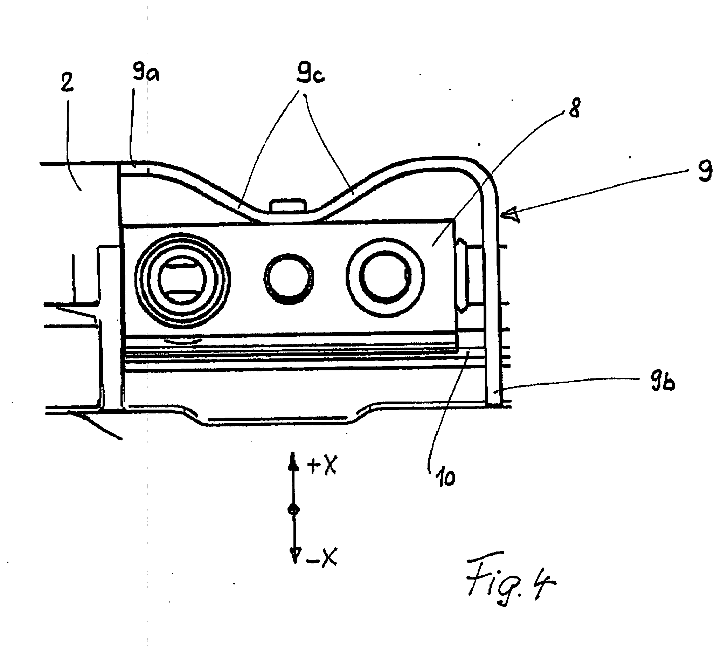

**Fig. 2** zeigt das Kühlmodul 1 in einer Ansicht entgegen der Fahrtrichtung des Kraftfahrzeuges, d. h. in Luftströmungsrichtung mit Blick auf den Kondensator 4, welcher zwei Sammelrohre 10, 11 sowie einen mit dem Sammelrohr 11 verbundenen Sammler (Trockner) 12 aufweist. Eine Kältemittelanschlussleitung 13 ist einerseits mit dem Anschlussflansch 8 und andererseits mit dem Sammelrohr 10 verbunden. Zwischen den Sammelrohren 10, 11 ist ein Netz mit waagerecht verlaufenden Rohren 14 angeordnet, welche von Kältemittel durchströmt werden und daher einer durch die wechselnde Temperatur des Kältemittels bedingten Wärmedehnung unterliegen. Der Kondensator 4 ist gegenüber der Zarge 2 auf beiden Seiten abgestützt: der Sammelbehälter 12 wird von Teilen 2a, 2b der Zarge 2 umfasst und ist ferner durch ein nicht näher dargestelltes unteres Lager 15 an der Zarge 2 befestigt. Der Anschlussflansch 8, welcher am Sammelrohr 10 befestigt, vorzugsweise angelötet ist, stützt sich mit seiner äußeren Fläche gegen den federnden Bügel 9 ab, wobei - was unten im Zusammenhang mit Fig. 4 näher erläutert wird - eine elastische Verformung des Bügels 9 in Längsrichtung der Rohre 14 möglich ist. Der Kondensator 4 liegt also mit seiner in der Zeichnung rechten Seite fest an der Zarge 2 an, während die linke Seite temperaturbedingte Dehnungen ausführen kann und damit Loslager aufweist. Der seitlich vom Anschlussflansch 8 angeordnete Bügel 9 ist in dieser Darstellung unterhalb des Kältemittelanschlussrohres 13 angeordnet, so dass eine Montage des Kondensators entgegen der Fahrtrichtung, d. h. in Richtung in die Zeichenebene hinein möglich ist. Der Anschlussflansch 8 bzw. der Kondensator 4 wird ferner durch eine Rastverbindung 16 in Position gehalten, d. h. in einer Richtung aus der Zeichenebene heraus fixiert. Die Montage des Kondensators erfolgt in umgekehrter Richtung durch Einschnappen und Verrasten gegenüber dem Anschlussflansch 8, was im Zusammenhang mit den folgenden Figuren näher erläutert wird.

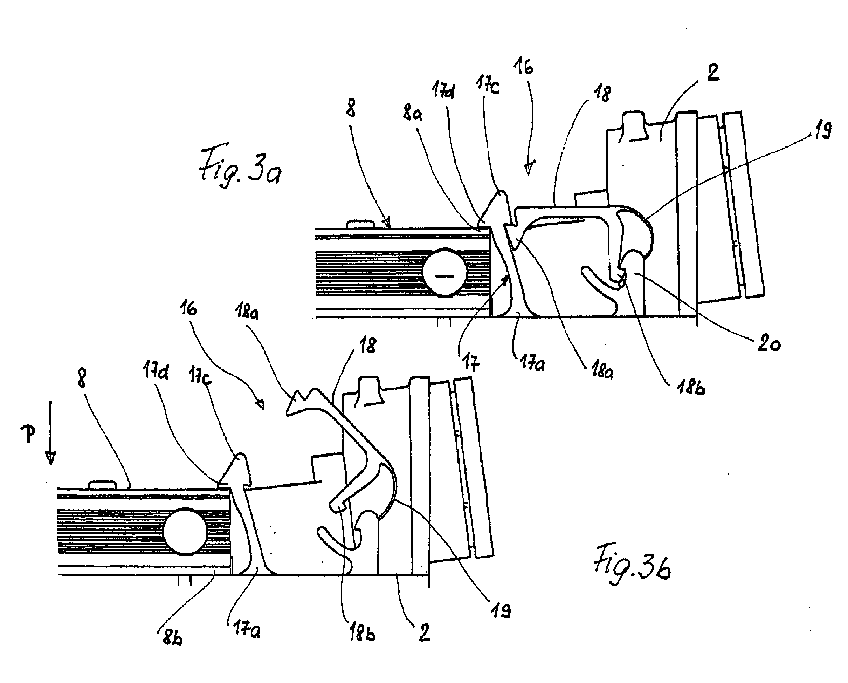

**Fig. 3a** zeigt die Rastverbindung 16 als Ausschnitt in einer Seitenansicht in verriegelter Position, während **Fig. 3b** die Rastverbindung 16 in entriegelter Position zeigt. Die Rastverbindung 16 besteht im Wesentlichen aus einem federnd ausgebildeten fingerartigen Rastelement 17, welches einen mit der Zarge 2 befestigten Fußbereich 17a, einen biegeelastischen mittleren Bereich 17b und einen Kopf 17c mit Rastnase 17d aufweist. Der Anschlussflansch 8 weist eine etwa rechtwinklig ausgebildete Kante 8a auf, auf welcher die Rastnase 17d aufliegt, wodurch der Anschlussflansch 8 bzw. der daran befestigte Kondensator 4 gegenüber der Zarge 2 fixiert ist.

Die Rastverbindung 16 umfasst ferner ein bogenförmig ausgebildetes Verriegelungselement 18, welches über ein Filmscharnier 19 und eine Stütze 20 mit der Zarge 2 verbunden ist. Vorzugsweise sind der Rastfinger 17 sowie das Verriegelungselement 18 einstückig an die Zarge 2 angespritzt. Wie aus Fig. 3a ersichtlich, stützt sich das Verriegelungselement 18 einerseits mit einem hakenförmigen Ende 18a gegenüber dem Rastfinger 17 und andererseits mit einem hakenförmigen Ende 18b gegenüber der Stütze 20 ab, so dass der Rastfinger 17 in seiner den Anschlussflansch 8 hintergreifenden Position fixiert ist. Beim Entriegeln - z. B. beim Ausbau des Kondensators - wird das Verriegelungselement 18 - wie aus Fig. 3b ersichtlich - aus der Verrastung mit dem Kopf 17c des Rastfingers 17 gelöst und nach oben verschwenkt, was durch das Filmscharnier 19 ermöglicht wird. Dadurch ist das Verriegelungselement 18 unverlierbar mit der Zarge 2 verbunden.

Die Montage des Kondensators 4 (vgl. Fig. 2) erfolgt in einer Richtung, die durch einen Pfeil P in Fig. 3b dargestellt ist, d. h. bei entriegeltem Rastfinger 17. Der Anschlussflansch 8 gleitet dann mit seiner unteren Kante 8b über eine am Kopf 17c angeordnet Gleitfläche und biegt den Rastfinger 17 zunächst zur Seite, bis dieser nach Erreichen der Endposition zurückfedert und die obere Kante 8a hintergreift. Anschließend erfolgt die Verriegelung durch Verschwenken des Verriegelungselementes 18.

**Fig. 4** zeigt den Anschlussflansch 8 mit Federbügel 9 als vergrößerten Ausschnitt. Der Anschlussflansch 8 ist - wie aus Fig. 2 ersichtlich - mit dem Sammelrohr 10 des Kondensators 4 verbunden, wobei sich die temperaturbedingte Dehnungen der Rohre 14 (vgl. Fig. 2) auf den Anschlussflansch 8 in die Richtungen +X, -X, dargestellt durch einen Doppelpfeil, übertragen. Dieser Dehnungsbewegung folgt der federnd ausgebildete Bügel 9. Letzterer weist zwei Enden 9a, 9b auf, welche mit der Zarge 2 verbunden, vorzugsweise an die Zarge angespritzt sind. Der Bügel 9 weist ferner einen federnden Bogen 9c auf, dessen Scheitelpunkt an dem Anschlussflansch 8 unter Vorspannung zur Anlage kommt. Der gesamte Bügel 9 ist somit als Blattfeder ausgebildet, welche zweiseitig, d. h. an den Enden 9a, 9b eingespannt ist. Der Federbügel 9 liegt nach der Montage des Kondensators bereits mit Vorspannung am Anschlussflansch 8 an, so dass einerseits fertigungsbedingte Toleranzen ausgeglichen und andererseits während des Betriebes auftretenden Dehnungen kompensiert werden können.

Im oben beschriebenen Ausführungsbeispiel ist ein Kondensator 4 mit Anschlussflansch 8 beispielhaft für einen Wärmeübertrager genannt. Sowohl die erfindungsgemäße Rastverbindung als auch der darüber hinaus beschriebene Bügel können jedoch auch für andere Wärmeübertrager, die in einer Zarge zu befestigen sind, mit den gleichen Vorteilen eingesetzt werden.

## Patentansprüche

1. Anordnung zur Befestigung eines Wärmeübertragers (4) in einer Zarge (2), vorzugsweise für Kraftfahrzeuge, wobei die Zarge (2) einen Rahmen mit Befestigungsmitteln und der Wärmeübertrager (4) mindestens einen Sammelbehälter (10) aufweisen, eines der Befestigungsmittel als Rastverbindung (16), bestehend aus einem fingerartigen Rastelement (17), welches den Sammelbehälter (10) hintergreift, und einem bügelförmigen Verriegelungselement (18), durch welches das Rastelement (17) verriegelbar ist, ausgebildet ist, **dadurch gekennzeichnet, dass** das Rastelement (17) federnd ausgebildet ist und einen Kopf (17c) mit einer Gleitfläche und einer Rastnase (17d) aufweist, wobei die Rastnase (17d) auf einer Kante des Sammelbehälters (10) aufliegt und das Verriegelungselement (18) über ein Filmscharnier (19) mit der Zarge (2) verbunden und zwischen einer Verriegelungs- sowie einer Entriegelungsstellung bewegbar, insbesondere verschwenkbar ist.

2. Anordnung nach Anspruch 1, **dadurch gekennzeichnet, dass** das Verriegelungselement (18) bogenförmig mit zwei hakenförmigen Enden (18a, 18b) ausgebildet ist, von denen ein Ende (18a) am Kopf (17c) des Rastelementes (17) und das andere Ende (18b) an einem Widerlager (20) abstützbar ist.

3. Anordnung nach Anspruch 1 oder 2, **dadurch gekennzeichnet, dass** das Filmscharnier (19) am Widerlager (20) befestigt ist.

4. Anordnung nach Anspruch 1, 2 oder 3, **dadurch gekennzeichnet, dass** das Verriegelungselement (18) unverlierbar mit der Zarge (2) verbunden ist.

5. Anordnung nach mindestens einem der Ansprüche 1 bis 4, **dadurch gekennzeichnet, dass** die Zarge (2) als Kunststoffspritzteil herstellbar ist und dass das Rast- und Verriegelungselement (17, 18, 19) sowie das Widerlager (20) an die Zarge (2) angespritzt sind.

6. Anordnung nach mindestens einem der Ansprüche 1 bis 5, **dadurch gekennzeichnet, dass** der Sammelbehälter als Sammelrohr (10) eines Kondensators (4) ausgebildet ist und einen Anschlussflansch (8) aufweist und dass das Rastelement (17) am Anschlussflansch (8) abstützbar ist.

## Claims

1. Assembly for fixing a heat exchanger (4) in a conduit (2), preferably for motor vehicles, the conduit (2) having a frame with fixing means and the heat exchanger (4) comprising at least one collector box (10), one the fixing means being formed as a catch connection (16) consisting of a finger-like detent element (17) that engages the collector box (10) at the rear and a stirrup-shaped locking element (18) through which the detent element (17) can be locked,
**characterised in that** the detent element (17) is springy and comprises a head (17c) with a sliding surface and a detent projection (17d), such that the said detent projection (17d) rests against an edge of the collector box (10), and the locking element (18) is connected to the conduit (2) by a film hinge (19) and can move, in particular by swivelling, between a locking position and a release position.

2. Assembly according to Claim 1, **characterised in that** the locking element (18) is curved and has two hook-shaped ends (18a, 18b), of which one end (18a) can be supported against the head (17c) of the detent element (17) and the other end (18b) can be supported against an abutment (20).

3. Assembly according to Claims 1 or 2, **characterised in that** the film hinge(19) is attached to the abutment (20).

4. Assembly according to Claims 1, 2 or 3, **characterised in that** the locking element (18) is permanently connected to the conduit (2).

5. Assembly according to at least one of Claims 1 to 4, **characterised in that** the conduit (2) can be made as an injection-moulded plastic component and the detent element and locking elements (17, 18, 19) and the abutment (20) are injection-moulded onto the conduit (2).

6. Assembly according to at least one of Claims 1 to 5, **characterised in that** the collector box is made as a collector tube (10) of a condenser (4) and has a connecting flange (8), and the detent element (17) can be supported on the connecting flange (8).

## Revendications

1. Agencement permettant la fixation d'un échangeur de chaleur (4) dans un bâti (2), de préférence pour des véhicules automobiles, où le bâti (2) présente un cadre comportant des moyens de fixation, et l'échangeur de chaleur (4) présente au moins un bac collecteur (10), l'un des moyens de fixation est configuré comme un assemblage par encliquetage (16) se composant d'un élément d'encliquetage (17), en forme de doigt, qui s'engage derrière le bac collecteur (10), et d'un élément de verrouillage (18), en forme d'étrier, par lequel l'élément d'encliquetage (17) est verrouillable,
**caractérisé en ce que** l'élément d'encliquetage (17) est configuré en faisant ressort et présente une tête (17c) comprenant une surface de glissement et un ergot d'encliquetage (17d), où l'ergot d'encliquetage (17d) s'applique sur un bord du bac collecteur (10), et l'élément de verrouillage (18) est relié au bâti (2), par une charnière pelliculaire (19), et est mobile, pouvant en particulier basculer entre une position de verrouillage et de déverrouillage.

2. Agencement selon la revendication 1, **caractérisé en ce que** l'élément de verrouillage (18), de forme arquée, est configuré en comportant deux extrémités (18a, 18b), en forme de crochet, dont l'une des extrémités (18a) peut venir en appui sur la tête (17c) de l'élément d'encliquetage (17), l'autre extrémité (18b) pouvant venir en appui sur une butée (20).

3. Agencement selon la revendication 1 ou 2, **caractérisé en ce que** la charnière pelliculaire (19) est fixée sur la butée (20).

4. Agencement selon la revendication 1, 2 ou 3, **caractérisé en ce que** l'élément de verrouillage (18) est relié au bâti (2), de façon imperdable.

5. Agencement selon au moins l'une quelconque des revendications 1 à 4, **caractérisé en ce que** le bâti (2) est réalisable comme une pièce en matière plastique moulée par injection, et **en ce que** l'élément d'encliquetage et de verrouillage (17, 18, 19) ainsi que la butée (20) sont moulés par injection, sur le bâti (2).

6. Agencement selon au moins l'une quelconque des revendications 1 à 5, **caractérisé en ce que** le bac collecteur est configuré comme un tuyau collecteur (10) d'un condenseur (4) et présente une bride de raccordement (8), et **en ce que** l'élément d'encliquetage (17) peut venir en appui sur la bride de raccordement (8).
